# EUROPÄISCHE PATENTSCHRIFT

(11) **EP 2 049 295 B1**
(45) Veröffentlichungstag und Bekanntmachung des Hinweises auf die Patenterteilung: **06.11.2013**
(21) Anmeldenummer: 07786377.7
(22) Anmeldetag: 27.07.2007
(51) Int. Cl.: B23C 5/02, B23D 13/00

(54) **STOSSWERKZEUG FÜR DIE SPANENDE BEARBEITUNG VON WERKSTÜCKEN**
SLOTTING TOOL FOR MACHINING WORKPIECES
OUTIL DE FRAPPE POUR L'USINAGE PAR ENLÈVEMENT DE COPEAUX DE PIÈCES

(30) Priorität: 29.07.2006 DE 102006035182
(43) Veröffentlichungstag der Anmeldung: 22.04.2009
(73) Patentinhaber: Hartmetall-Werkzeugfabrik Paul Horn GmbH, 72072 Tübingen (DE)
(72) Erfinder: NOUREDDINE, Hassan, 72147 Nehren (DE)
(74) Vertreter: Keck, Stephan
(86) Internationale Anmeldenummer: PCT/EP2007/006663
(87) Internationale Veröffentlichungsnummer: WO 2008/014934

(56) Entgegenhaltungen:
- DE-U1- 9 203 373
- DE-U1- 29 719 482
- DE-U1- 29 810 969

## Beschreibung

Die Erfindung betrifft ein Stoßwerkzeug für die spanende Bearbeitung von Werkstücken mit einem plattenartigen Körper, der Anlageflächen aufweist, die mittels einer Spanneinrichtung an Sitzflächen eines Halters festlegbar sind, über die eine Zerspanungskraft auf am Körper ausgebildete Schneiden übertragbar ist, deren Schneidkanten längs der durch sie definierten Schnittlinie zueinander versetzt sind.

Ein Schneidwerkzeug, bei dem Schneidkanten, voneinander abgesetzt, eine sich in Kantenlängsrichtung erstreckende Reihe bilden, ist im Dokument EP 0 559 965 B1 offenbart. Beim bestimmungsgemäßen Einsatz des bekannten Schneidwerkzeuges zum Stechdrehen an Außenkonturen von Werkstücken erfolgt die Spanbildung über die Gesamtbreite der Kontur, d. h. über die Gesamtlänge der hintereinander liegenden Schneidkanten. Die Spanbildung erfolgt in gleicher Weise, wenn ein solches Schneidwerkzeug als Stoßwerkzeug benutzt wird, um beispielsweise eine Nut mit gestuftem Nutboden zu stoßen. Auch in diesem Falle entspricht die Breite des gebildeten Spanes der Breite der Nut. Wie sich gezeigt hat, ist die Bildung von Spänen verhältnismäßig großer Breite nachteilig, sowohl hinsichtlich des leichten Spanabflusses vom unmittelbaren Schneidbereich als auch des Abtransportes von der Werkzeugumgebung innerhalb der betreffenden Werkzeugmaschine.

Ein dem oben beschriebenen Werkzeug sehr ähnliches, weiteres Schneidwerkzeug dieser Art ist aus der DE 29 719 482 U1 bekannt. Ein weiteres Werkzeug dieser Art ist aus der DE 92 03 373 U1, die dem Oberbegriff vom Anspruch 1 zugrundeliegt bekannt.

Der Erfindung liegt im Hinblick hierauf die Aufgabe zugrunde, ein Stoßwerkzeug zur Verfügung zu stellen, das hinsichtlich der Spanbildung optimiert ist.

Erfindungsgemäß ist diese Aufgabe durch ein Stoßwerkzeug gelöst, das die Merkmale des Patentanspruches 1 in seiner Gesamtheit aufweist.

Danach besteht die wesentliche Besonderheit der Erfindung darin, dass die Schneidkanten nicht nur in Kantenlängsrichtung zueinander versetzt sind, sondern auch in quer zur Schnittlinie verlaufender Richtung zueinander versetzt sind, so dass zwischen benachbarten Schneidkanten Spanleitstufen gebildet sind. Dies führt zu einer Diskontinuität der ansonsten geradlinigen Schnittlinie. Diese Abstufung der Schnittlinie führt wiederum zu einer gesonderten Spanbildung an jeder Schneidkante, so dass anstelle eines Spanes, dessen Breite der Gesamtlänge der Schneidkanten entspricht, mehrere weniger breite Späne gebildet werden, deren Spanbreiten jeweils der Länge der einzelnen, abgesetzten Schneidkanten entspricht. Hinsichtlich des Spanflusses und des Abtransportes ergeben sich dadurch die erwünschten Vorteile und Erleichterungen.

Bei Ausführungsbeispielen, bei denen über die Sitzflächen des Halters für eine Stossbearbeitung eine in dessen Längsrichtung wirkende Zerspanungskraft auf die Schneidkanten übertragbar ist, sind die Schneidkanten zueinander in der Weise versetzt, dass die Spanleitstufen eine in Arbeitsrichtung der Stossbearbeitung gemessene Stufenhöhe besitzen. Eine derartige Stufung führt zu einem besonders sicheren Brechen des Spanes an der jeweiligen Stufe.

Bei vorteilhaften Ausführungsbeispielen kann die Anordnung so getroffen sein, dass drei Hauptschneiden vorhanden sind, deren mittlere die größte Breite mit längerer Schneidkante und deren beide seitlich folgenden Schneide eine geringere Breite mit Schneidkanten gleicher kürzerer Längen aufweisen. Diese Formgebung ist hinsichtlich der Einleitung der Zerspanungskraft günstig, weil die größte Kraft im Zentralbereich an der die längste Schneidkante aufweisenden Schneide auftritt, verglichen mit der geringeren Zerspanungskraft an den kürzeren, seitlichen Schneidkanten.

Die Stufung kann so getroffen sein, dass die Schneidkanten derart versetzt sind, dass die der mittleren Schneide zugehörige Schneidkante in Arbeitsrichtung den Schneidkanten der seitlichen Schneiden voreilend oder den Schneidkanten der seitlichen Schneiden nacheilend ist.

Besonders günstige Verhältnisse hinsichtlich der Spanaufteilung und des Spanflusses ergeben sich, wenn sich an die Schneidkanten der Hauptschneiden jeweils Spanflächen anschließen, deren mittlere von den seitlichen Spanflächen durch an den Spanleitstufen ausgebildete, zueinander parallele Seitenwandteile getrennt ist. Diese Seitenwandteile bilden sozusagen die Wand eines Spanleitkanales, der beidseits durch die Wandteile begrenzt ist, wenn die der mittlere Schneide zugehörige Schneidkante eine in Arbeitsrichtung nacheilende Schneidkante ist.

Vorzugsweise sind Spanflächen mit gleichem Krümmungsradius als entgegen der Arbeitsrichtung vertiefte Wölbungen ausgebildet. Insbesondere bei Schneidkanten stark unterschiedlicher Längen könnten unter Umständen auch unterschiedliche Krümmungsradien vorgesehen sein.

Vorzugsweise ist eine allen Schneidkanten der Hauptschneiden gemeinsam zugehörige, ebene, stirnseitige Freifläche vorgesehen, um einen für den jeweiligen Einsatzzweck des Schneidwerkzeuges geeigneten Freiwinkel zu bilden.

In entsprechender Weise sind vorzugsweise am Körper auch seitliche Freiflächen vorhanden, die sich an die äußeren Ränder der seitlichen Spanflächen anschließen und vorzugsweise jeweils gleiche Freiwinkel bilden.

Bei besonders vorteilhaften Ausführungsbeispielen, die eine besonders sichere und starre Festlegung in einem betreffenden Halter ermöglichen, besitzt der plattenartige Körper zumindest über einen Großteil seines die Anlageflächen aufweisenden Festlegeteiles einen im großen Ganzen keilförmigen Umriß mit Seitenwänden, die, von einem den Hauptschneiden entgegengesetzten Scheitelbereich ausgehend, V-förmig divergieren und an Sitzwände des Sitzes des Halters, die von einem Vertiefungsgrund radial nach außen und zumindest teilweise ebenso V-förmig divergieren, derart angepaßt sind, dass der Scheitelbereich des Körpers im Sitz einen vorgebbaren freien Abstand zu dem Boden des Vertiefungsgrundes aufweist.

Bei derartigen Ausführungsbeispielen kann der Festlegeteil des Körpers eine ebene Anlagefläche für eine formschlüssige Anlage an einer ebenen rückwärtigen Endfläche des Sitzes aufweisen.

Bei besonders vorteilhaften Ausführungsbeispielen besitzt der plattenartige Körper die Gestalt eines vorzugsweise aus einem Hartmetallwerkstoff gebildeten Blockes, dessen die Hauptschneiden aufweisendes Schneidenteil einen Fortsatz des Festlegeteils bildet, wobei der Fortsatz derart geformt ist, dass er einen Überstand der Hauptschneiden über den Halter hinaus bildet.

Nachstehend ist die Erfindung anhand von in der Zeichnung dargestellten Ausführungsbeispielen im Einzelnen erläutert. Es zeigen:
- Fig. 1 und 2 gegenüber einer praktischen Ausführungsform in etwa sechsfacher Vergrößerung gezeichnete perspektivische Schrägansichten eines ersten bzw. zweiten Ausführungsbeispieles des erfindungsgemäßen Schneidwerkzeuges;
- Fig. 3 eine Vorderansicht des Ausführungsbeispieles von Fig. 2;
- Fig. 4 eine gegenüber den vorausgegangenen Fig. in etwas kleinerem Maßstab gezeichnete Seitenansicht des Ausführungsbeispieles von Fig. 1;
- Fig. 5 eine gegenüber Fig. 4 stark vergrößert gezeichnete Teildarstellung lediglich des in Fig. 4 mit V bezeichneten Bereiches und
- Fig. 6 eine Darstellung des Ausführungsbeispieles von Fig. 1 und 4, gesehen auf eine gemeinsame, stirnseitige Freifläche der Hauptschneiden.

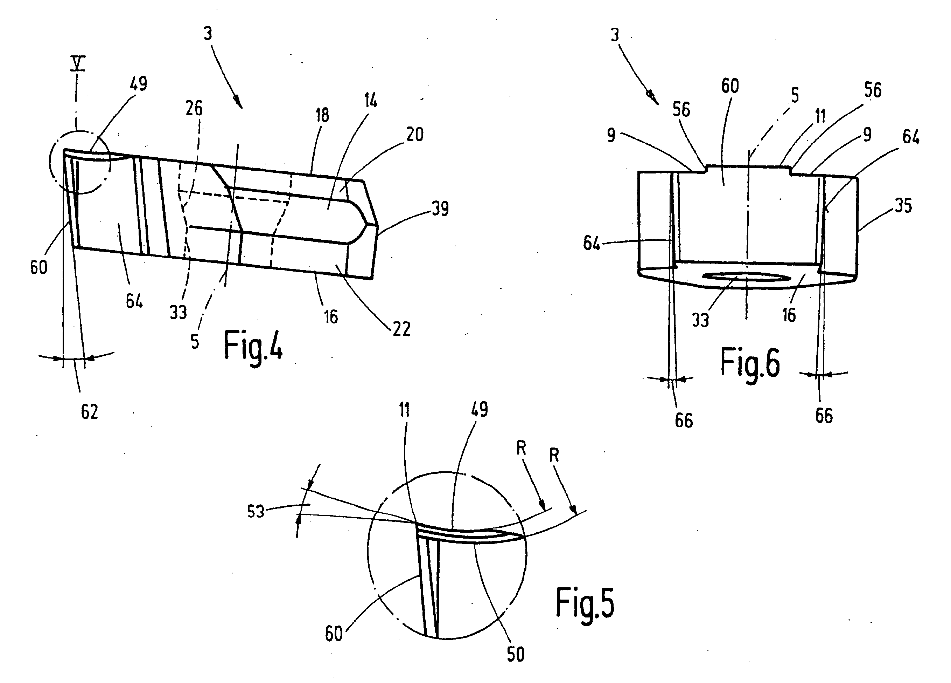

Nachstehend ist die Erfindung anhand von Ausführungsbeispielen erläutert, bei dem das Schneidwerkzeug jeweils ein Stoßwerkzeug bildet, wobei das Schneidwerkzeug 3, das an einem nicht gezeigten Halter festlegbar ist, beim Arbeitsvorgang entlang einer nur in Fig. 4 und 6 angedeuteten Längsachse 5 bewegt wird, um an Hauptschneiden 7 und 8, deren Schneidkanten 9 bzw. 11 sich senkrecht zur Längsachse 5 erstrecken, eine Schneid- oder Zerspanungskraft wirksam zu machen. Bei einer alternativen Anwendung des Schneidwerkzeuges 3 für Drehbearbeitung oder Bohrbearbeitung, wobei ein Zerspanungsvorgang an neben den Hauptschneiden 7 gelegenen Nebenschneiden 12 stattfinden kann, wirkt ebenfalls eine Kraftkomponente entlang der Längsachse 5.

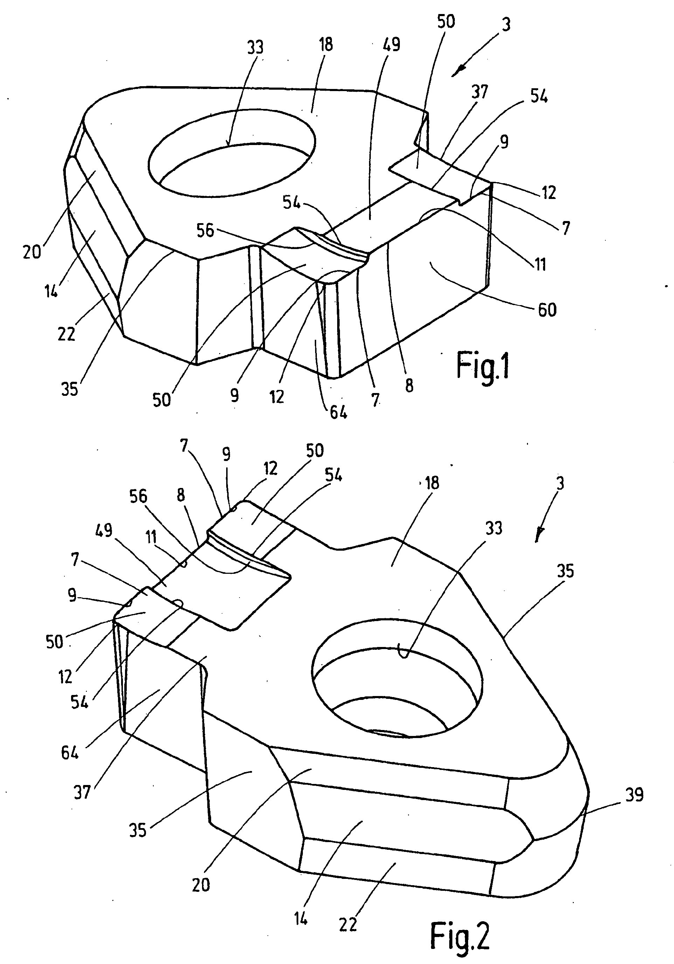

Wie aus den Fig. ersichtlich, hat das Festlegeteil 35 des blockförmig oder plattenartig gestalteten Körpers des Schneidwerkzeuges 3 im Umriß im großen Ganzen eine Keilform, die einem V-förmigen Aufnahmequerschnitt des Sitzes in einem nicht gezeigten Halter angepaßt ist. Die Keilform ist im unteren Scheitelbereich 39 abgerundet. Die sich vom Scheitelbereich 39 divergierend erstreckenden Seitenwände 41 des Festlegeteils 35 weisen von der ebenen Gestalt abweisende Flächenbereiche für eine optimale Anlage an den Sitzwänden des nicht gezeigten Sitzes auf. Wie aus Fig. 1, 2 und 4, am deutlichsten aus Fig. 4, zu ersehen ist, handelt es sich hierbei um ebene Teilflächen, von denen eine zentrale Teilfläche 14 zu beiden Seiten der Keilform jeweils eine Ebene bildet, die zu rückwärtiger Endfläche 16 und frontseitiger Vorderfläche 18 des Schneidwerkzeuges 3 jeweils senkrecht sind. An die zentrale Teilfläche 14 schließen sich, hierzu geneigt, ebene seitliche Teilflächen 20 und 22 an, deren Breite geringer ist als diejenige der zentralen Teilfläche 14.

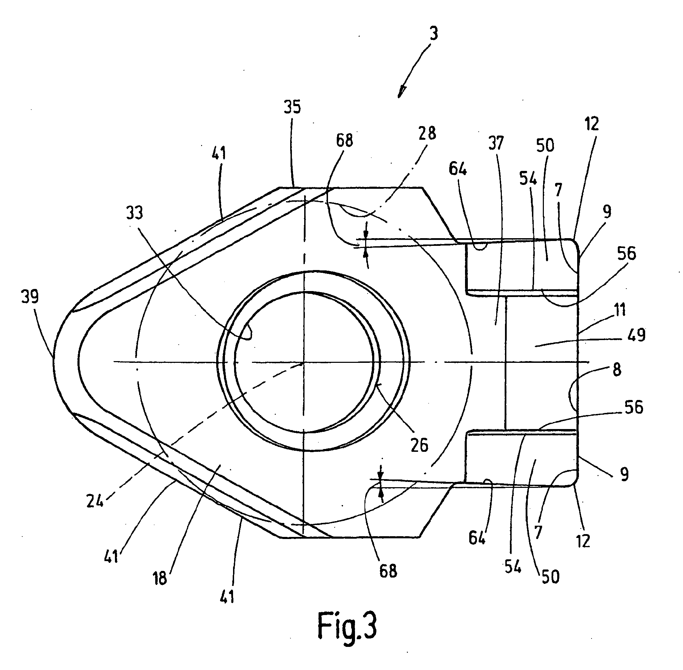

Im mittleren Bereich des Festlegeteiles 35 befindet sich eine an der Frontfläche 18 konisch erweiterte Durchgangsbohrung 33 für eine Spannschraube in Form einer Senkkopfschraube mit einer am Schraubenkopf befindlichen Konusfläche. Wie insbesondere Fig. 3 zeigt, ist die Bohrung 33 gegenüber dem Zentrum 24 der Längsachse 5 leicht exzentrisch versetzt, so dass bei Anpressen des Kopfkonus der Spannschraube an eine die Bohrung 33 erweiternde Konusfläche 26 eine Kraftkomponente erzeugt wird, so dass die Spannschraube das Schneidwerkzeug 3 nicht nur mit seiner Anlagefläche 16 an eine zugeordnete plane Endfläche des Sitzes anpresst, sondern auch eine Kraftkomponente erzeugt wird, die die Seitenwände 41 mit ihren Teilflächen 14, 20 und 22 an zugeordnete Seitenwände des Sitzes anpresst, wobei die Geometrie der Keilform des Schneidwerkzeuges 3 und des Sitzes so angepaßt sind, dass der Scheitelbereich 39 des Schneidwerkzeuges 3 einen Abstand vom Boden des zugewandten Grundes des Sitzes im Halter aufweist.

Die Hauptschneiden 7 und 8 sind an einem Schneidenteil 37 vorgesehen, der einen Fortsatz des Festlegeteiles 35 bildet, so dass sich für die Schneiden 7, 8 ein Überstand über den Halter hinaus ergibt, von dem lediglich in Fig. 3 eine Umrißlinie 28 angedeutet ist, der im übrigen jedoch nicht dargestellt ist. die Fig. 1 sowie 4 bis 6 verdeutlichen ein erstes Ausführungsbeispiel der besonderen Gestaltung der Schneiden 7 und 8, während Fig. 2 und 3 ein diesbezüglich abgewandeltes, zweites Ausführungsbeispiel zeigen. Bei beiden Ausführungsformen sind die Schneiden 7 und 8 in gestufter Anordnung ausgebildet, wobei der Unterschied der Ausführungsbeispiele darin besteht, dass beim Beispiel von Fig. 1 sowie 4 bis 6 die zentral gelegene Hauptschneide 8 mit ihrer Schneidkante 11 in Arbeitsrichtung den Schneidkanten 9 der seitlichen Schneiden 7 voreilend ist, während beim Beispiel von Fig. 2 und 3 die Schneidkante 11 der mittleren Schneide 8, bezogen auf die Arbeitsrichtung, den Schneidkanten 9 der seitlichen Schneiden 7 nacheilend ist.

Diese höhenmäßige Stufung führt zur Ausbildung von Spanleitstufen 54, die sich, zur Schneidkante 11 senkrecht verlaufend, in Richtung auf den Festlegeteil 35 erstrecken und ebene Seitenwandteile 56 bilden, siehe Fig. 1 bis 3. Diese Seitenwandteile 56 bilden gewissermaßen Begrenzungen von Spanleitkanälen, wobei die sich an die Schneidkante 11 anschließende Spanfläche 49 sowie die an die Schneidkanten 9 anschließenden Spanflächen 50 jeweils den Grund des betreffenden Spanleitkanales bilden. Bei dem Ausführungsbeispiel von Fig. 2 und 3 bilden die Seitenwandteile 56 eine beidseitige Begrenzung des vertieften, mittleren Spanleitkanales, dessen Kanalgrund durch die Spanfläche 49 gebildet ist.

Wie aus Fig. 1, 2 und 4 sowie insbesondere aus Fig. 5 entnehmbar ist, sind die Spanflächen 49 und 50 jeweils schaufelartig gewölbt, wobei die Wölbung entgegen der Arbeitsrichtung vertieft ist. In Fig. 5 ist der Krümmungsradius der Wölbung mit R bezeichnet, wobei beim vorliegenden Beispiel der Krümmungsradius R für sämtliche Spanflächen 49, 50 jeweils gleich gewählt ist. In Fig. 5 ist bei 58 auch der aufgrund der Geometrie der Spanflächen 49, 50 gebildete Spanwinkel angedeutet, der vorzugsweise in der Größenordnung von 15 Grad liegt.

An die Hauptschneiden 8 und 11 schließt sich eine gemeinsame, in Fig. 6 in Draufsicht gezeigte, ebene Freifläche 60 an, die einen stirnseitigen Abschluss des Schneidwerkzeuges 3 bildet und eine derart geneigte Ebene bildet, dass sich ein in Fig. 4 bei 62 angedeuteter Freiwinkel in der Größenordnung von 6 Grad ergibt. An die Nebenschneiden 12 schließen sich als Seitenwände des Seitenteiles 37 ebenfalls ebene, seitliche Freiflächen 64 an, deren Ebenen so geneigt sind, dass jeweils ein in Fig. 6 bei 66 angedeuteter seitlicher Freiwinkel in der Größenordnung von 2 Grad gebildet wird.

Wie Fig. 3 entnehmbar ist, sind die Freiflächen 64 zusätzlich in Richtung auf das Festlegeteil 35 nach einwärts geneigt, so dass an die Nebenschneiden 12 anschließende Freiwinkel nach unten gebildet sind, die in Fig. 3 bei 68 angedeutet sind und etwa 3 Grad betragen können.

Vorstehend ist die Erfindung anhand eines Schneidwerkzeuges 3 erläutert, dessen Körper eine Keilform besitzt, wobei vom Festlegeteil 35 ausgehend lediglich ein Schneidenteil 37 mit der erfindungsgemäß gestuften Schneidengeometrie vorhanden ist. Es versteht sich, dass anstelle der gezeigten unsymmetrischen Gestaltung des Körpers ein symmetrisch gestalteter Körper vorgesehen sein kann, bei dem, zur Bildung einer Wendeschneidplatte, mehr als ein sich an den Festlegeteil anschließender Schneidenteil vorgesehen ist, der jeweils mit der erfindungsgemäßen, abgestuften Schneidengeometrie versehen ist, so dass durch Wenden der Schneidplatte ein gewünschter Schneidenteil zum Einsatz gebracht werden kann.

## Patentansprüche

1. Stoßwerkzeug für die spanende Bearbeitung von Werkstücken mit einem plattenartigen Körper, der Anlageflächen (16, 41) aufweist, die mittels einer Spanneinrichtung an Sitzflächen eines Halters festlegbar sind, über die eine Zerspanungskraft auf am Körper ausgebildete Schneiden (7, 8) übertragbar ist, deren Schneidkanten (9, 11) längs der durch sie definierten Schnittlinie zueinander versetzt sind, **dadurch gekennzeichnet, dass** die Schneidkanten (9, 11) zur Bildung von zwischen ihnen befindlichen Spanleitstufen (54) auch in quer zur Schnittlinie verlaufender Richtung in Arbeitsrichtung einer Stoßbearbeitung zueinander versetzt sind, so dass die Spanleitstufen (54) mit einer in Arbeitsrichtung der Stoßbearbeitung gemessenen Stufenhöhe zueinander versetzt sind.

2. Stoßwerkzeug nach Anspruch 1, **dadurch gekennzeichnet, dass** drei Hauptschneiden (7, 8) vorhanden sind, deren mittlere (8) die größte Breite mit längster Schneidkante (11) und deren beide seitlich folgenden Schneiden (7) eine geringere Breite mit Schneidkanten (9) gleicher kürzeren Längen aufweisen.

3. Stoßwerkzeug nach Anspruch 2, **dadurch gekennzeichnet, dass** die Schneidkanten (9, 11) derart versetzt sind, dass die der mittleren Schneide (8) zugehörige Schneidkante (11) in Arbeitsrichtung den Schneidkanten (9) der seitlichen Schneiden (7) voreilend ist.

4. Stoßwerkzeug nach Anspruch 2, **dadurch gekennzeichnet, dass** die Schneidkanten (9, 11) derart versetzt sind, dass die der mittleren Schneide (8) zugehörige Schneidkante (11) in Arbeitsrichtung den Schneidkanten (9) der seitlichen Schneiden (7) nacheilend ist.

5. Stoßwerkzeug nach einem der Ansprüche 1 bis 4, **dadurch gekennzeichnet, dass** sich an die Schneidkanten (9, 11) der Hauptschneiden (7, 8) jeweils Spanflächen (50 bzw. 49) anschließen, deren mittlere (49) von den seitlichen Spanflächen (50) durch an den Spanleitstufen (54) ausgebildete zueinander parallele Seitenwandteile (56) getrennt ist.

6. Stoßwerkzeug nach Anspruch 5, **dadurch gekennzeichnet, dass** die Spanflächen (49, 50) mit vorzugsweise gleichem Krümmungsradius (R) als entgegen der Arbeitsrichtung vertiefte Wölbungen ausgebildet sind.

7. Stoßwerkzeug nach einem der Ansprüche 2 bis 6, **dadurch gekennzeichnet, dass** eine allen Schneidkanten (9, 11) der Hauptschneiden (7, 8) gemeinsam zugehörige, ebene, stirnseitige Freifläche (60) vorgesehen ist.

8. Stoßwerkzeug nach einem der Ansprüche 5 bis 7, **dadurch gekennzeichnet, dass** am Körper seitliche Freiflächen (64) vorhanden sind, die sich an die äußeren Ränder der seitlichen Spanflächen (50) anschließen und vorzugsweise jeweils gleiche Freiwinkel (66, 68) bilden.

9. Werkzeug für die spanende Bearbeitung von Werkstücken, mit einem Stoßwerkzeug (3) nach Anspruch 1 und einem Halter, wobei das Stoßwerkzeug (3) einen plattenartigen Körper mit Anlageflächen (16, 41) aufweist, die mittels einer Spanneinrichtung an Sitzflächen des Halters festgelegt sind.

10. Werkzeug nach Anspruch 9, **dadurch gekennzeichnet, dass** der plattenartige Körper zumindest über einen Großteil seines die Anlageflächen (16, 41) aufweisenden Festlegeteils (35) einen im großen Ganzen keilförmigen Umriß mit Seitenwänden (41) besitzt, die, von einem den Hauptschneiden (7, 8) entgegengesetzten Scheitelbereich (39) ausgehend, V-förmig divergieren und an Sitzwände des Sitzes des Halters, die von einem Vertiefungsgrund radial nach außen und zumindest teilweise ebenso V-förmig divergieren, derart angepaßt sind, dass der Scheitelbereich (39) des Körpers im Sitz einen vorgebbaren freien Abstand zu dem Boden des Vertiefungsgrundes aufweist.

11. Werkzeug nach Anspruch 10, **dadurch gekennzeichnet, dass** der Festlegeteil (35) des Körpers des Stoßwerkzeuges (3) eine ebene Anlagefläche (16) für eine formschlüssige Anlage an einer ebenen rückwärtigen Endfläche des Sitzes aufweist.

12. Werkzeug nach einem der Ansprüche 9 bis 11, **dadurch gekennzeichnet, dass** der plattenartige Körper des Stoßwerkzeuges (3) die Gestalt eines vorzugsweise aus einem Hartmetallwerkstoff gebildeten Blockes besitzt, dessen die Hauptschneiden (7, 8) aufweisendes Schneidenteil (37) einen Fortsatz des Festlegeteils (35) bildet, wobei der Fortsatz derart geformt ist, dass er einen Überstand der Hauptschneiden (7, 8) über den Halter hinaus bildet.

## Claims

1. Slotting tool for machining workpieces, having a plate-like body which has abutment surfaces (16, 41) which are securable to seat surfaces of a holder by means of a clamping device, a machining force being transmissible to cutting lips (7, 8) formed on the body via said seat surfaces, the cutting edges (9, 11) of said cutting lips (7, 8) being offset with respect to one another along the cutting line which they define, **characterized in that**, in order to form chip breaker grooves (54) between the cutting edges (9, 11), said cutting edges (9, 11) are also offset with respect to one another in a direction, extending transversely to the cutting line, in the working direction of a slotting operation, such that the chip breaker grooves (54) are offset with respect to one another with a groove height measured in the working direction of the slotting operation.

2. Slotting tool according to Claim 1, **characterized in that** three main cutting lips (7, 8) are provided, the central one (8) of which has the greatest width with the longest cutting edge (11) and the two laterally following cutting lips (7) of which have a smaller width with cutting edges (9) having identical shorter lengths.

3. Slotting tool according to Claim 2, **characterized in that** the cutting edges (9, 11) are offset such that the cutting edge (11) belonging to the central cutting lip (8) leads the cutting edges (9) of the lateral cutting lips (7) in the working direction.

4. Slotting tool according to Claim 2, **characterized in that** the cutting edges (9, 11) are offset such that the cutting edge (11) belonging to the central cutting lip (8) trails the cutting edges (9) of the lateral cutting lips (7) in the working direction.

5. Slotting tool according to one of Claims 1 to 4, **characterized in that** the cutting edges (9, 11) of the main cutting lips (7, 8) are adjoined in each case by rake faces (50 and 49), the central one (49) of which is separated from the lateral rake faces (50) by mutually parallel side-wall parts (56) formed on the chip breaker grooves (54).

6. Slotting tool according to Claim 5, **characterized in that** the rake faces (49, 50) are formed as concavities that are recessed counter to the working direction with preferably an identical radius of curvature (R).

7. Slotting tool according to one of Claims 2 to 6, **characterized in that** a planar, end-side flank (60) that belongs jointly to all of the cutting edges (9, 11) of the main cutting lips (7, 8) is provided.

8. Slotting tool according to one of Claims 5 to 7, **characterized in that** lateral flanks (64) which adjoin the outer rims of the lateral rake faces (50) and preferably each form an identical clearance angle (66, 68) are present on the body.

9. Tool for machining workpieces, having a slotting tool (3) according to Claim 1 and a holder, wherein the slotting tool (3) has a plate-like body having abutment surfaces (16, 41), which are secured to seat surfaces of the holder by means of a clamping device.

10. Tool according to Claim 9, **characterized in that** the plate-like body has, at least over the majority of its securing part (35) that has the abutment surfaces (16, 41), a by and large wedge-shaped outline having side walls (41) which, starting from a vertex region (39) opposite the main cutting lips (7, 8), diverge in a V-shaped manner and are adapted to seat walls of the seat of the holder, said seat walls diverging radially toward the outside from the base of a depression and at least partially likewise in a V-shaped manner, such that the vertex region (39) of the body in the seat is at a predeterminable free distance from the bottom of the base of the depression.

11. Tool according to Claim 10, **characterized in that** the securing part (35) of the body of the slotting tool (3) has a plain abutment surface (16) for abutting in a form-fitting manner against a planar rear end face of the seat.

12. Tool according to one of Claims 9 to 11, **characterized in that** the plate-like body of the slotting tool (3) has the shape of a block that is formed preferably from a carbide material, the cutting-lip part (37), having the main cutting lips (7, 8), of said block forming a continuation of the securing part (35), wherein the continuation is shaped such that it forms a projection of the main cutting lips (7, 8) beyond the holder.

## Revendications

1. Outil de frappe pour l'usinage par enlèvement de copeaux de pièces, comprenant un corps en forme de plaque qui présente des surfaces d'appui (16, 41) qui peuvent être fixées au moyen d'un dispositif de serrage contre des surfaces de siège d'un support, par le biais desquelles une force d'enlèvement de copeaux peut être transmise à des tranchants (7, 8) réalisés sur le corps, dont les arêtes de coupe (9, 11) sont décalées l'une par rapport à l'autre le long de la ligne de coupe qu'elles définissent, **caractérisé en ce que** les arêtes de coupe (9, 11), pour former des gradins de guidage des copeaux (54) situés entre elles, sont également décalées l'une par rapport à l'autre dans la direction s'étendant transversalement à la ligne de coupe dans la direction de travail d'un usinage par frappe, de telle sorte que les gradins de guidage des copeaux (54) soient décalés l'un par rapport à l'autre d'une hauteur de gradin mesurée dans la direction de travail de l'usinage par frappe.

2. Outil de frappe selon la revendication 1, **caractérisé en ce que** trois tranchants principaux (7, 8) sont prévus, dont le tranchant central (8) présente la plus grande largeur avec la plus longue arête de coupe (11) et dont les deux tranchants latéraux suivants (7) présentent une plus faible largeur avec des arêtes de coupe (9) de longueurs plus courtes identiques.

3. Outil de frappe selon la revendication 2, **caractérisé en ce que** les arêtes de coupe (9, 11) sont décalées de telle sorte que l'arête de coupe (11) appartenant au tranchant central (8) soit en avant dans la direction de travail par rapport aux arêtes de coupe (9) des tranchants latéraux (7).

4. Outil de frappe selon la revendication 2, **caractérisé en ce que** les arêtes de coupe (9, 11) sont décalées de telle sorte que l'arête de coupe (11) appartenant au tranchant central (8) soit en arrière dans la direction de travail par rapport aux arêtes de coupe (9) des tranchants latéraux (7).

5. Outil de frappe selon l'une quelconque des revendications 1 à 4, **caractérisé en ce que** des surfaces d'enlèvement de copeaux (50, respectivement 49) se raccordent à chaque fois aux arêtes de coupe (9, 11) des tranchants principaux (7, 8), dont la surface d'enlèvement de copeaux centrale (49) est séparée des surfaces d'enlèvement de copeaux latérales (50) par des parties de parois latérales (56) parallèles l'une à l'autre et réalisées sur les gradins de guidage des copeaux (54).

6. Outil de frappe selon la revendication 5, **caractérisé en ce que** les surfaces d'enlèvement de copeaux (49, 50) sont réalisées de préférence avec le même rayon de courbure (R) que des courbures renfoncées par rapport à la direction de travail.

7. Outil de frappe selon l'une quelconque des revendications 2 à 6, **caractérisé en ce qu'**il est prévu une surface de dépouille frontale plane (60) appartenant en commun à toutes les arêtes de coupe (9, 11) des tranchants principaux (7, 8).

8. Outil de frappe selon l'une quelconque des revendications 5 à 7, **caractérisé en ce que** des surfaces de dépouille latérales (64) sont prévues sur le corps, lesquelles se raccordent aux bords extérieurs des surfaces d'enlèvement de copeaux latérales (50) et forment de préférence à chaque fois des angles de dépouille identiques (66, 68).

9. Outil pour l'usinage par enlèvement de copeaux de pièces, comprenant un outil de frappe (3) selon la revendication 1 et un support, l'outil de frappe (3) présentant un corps en forme de plaque avec des surfaces d'appui (16, 41), lesquelles surfaces d'appui sont fixées au moyen d'un dispositif de serrage sur des surfaces de siège du support.

10. Outil selon la revendication 9, **caractérisé en ce que** le corps en forme de plaque possède, au moins sur une grande partie de sa partie de fixation (35) présentant les surfaces d'appui (16, 41), un pourtour principalement cunéiforme avec des parois latérales (41) qui, partant d'une région de sommet (39) opposée aux tranchants principaux (7, 8), divergent en forme de V et sont adaptées à des parois de siège du siège du support qui divergent depuis une base du renfoncement radialement vers l'extérieur et au moins en partie également en forme de V, de telle sorte que la région de sommet (39) du corps présente dans le siège une distance libre prédéfinissable par rapport au fond de la base du renfoncement.

11. Outil selon la revendication 10, **caractérisé en ce que** la partie de fixation (35) du corps de l'outil de frappe (3) présente une surface d'appui plane (16) pour un appui par engagement positif contre une surface d'extrémité arrière plane du siège.

12. Outil selon l'une quelconque des revendications 9 à 11, **caractérisé en ce que** le corps en forme de plaque de l'outil de frappe (3) possède la configuration d'un bloc formé de préférence d'un matériau en métal dur, dont la partie de tranchant (37) présentant les tranchants principaux (7, 8) forme une avancée de la partie de fixation (35), l'avancée étant formée de telle sorte qu'elle forme un dépassement des tranchants principaux (7, 8) au-delà du support.
